# EUROPEAN PATENT APPLICATION

(11) **EP 4 391 161 A1**
(43) Date of publication of application: **26.06.2024**
(21) Application number: 23176098.4
(22) Date of filing: 30.05.2023
(51) Int. Cl.: H01M 50/105, H01M 50/133, H01M 50/14, H01M 50/30

(54) **POUCH UNIT AND BATTERY CELL INCLUDING THE SAME**

(30) Priority: 29.11.2022 KR 20220162492
(71) Applicant: SK On Co., Ltd., Seoul 03161 (KR)
(72) Inventor: PARK, Sun Min, 34124 Daejeon (KR); CHOI, Seung Won, 34124 Daejeon (KR); BYUN, Jae Gyu, 34124 Daejeon (KR); OH, Won Je, 34124 Daejeon (KR); JEONG, Taek Eon, 34124 Daejeon (KR)
(74) Representative: Prüfer & Partner mbB Patentanwälte · Rechtsanwälte

(57) **Abstract**

A pouch unit and a battery cell including the same are disclosed. The pouch unit comprises a pouch sheet (100) having an inner surface and an outer surface opposite the inner surface, an accommodation portion formed on the pouch sheet (100), the accommodation portion forming an accommodation space that is open in a direction in which the inner surface faces, a perimeter portion (300) formed on the pouch sheet (100), the perimeter portion (300) (300)being positioned between a perimeter of the pouch sheet (100) and the accommodation portion, and a notch portion formed alongside a side of the accommodation portion at the perimeter portion (300), the notch portion being concave on the inner surface.

## Description

### TECHNICAL FIELD

The present disclosure relates to a pouch unit and a battery cell including the same.

### BACKGROUND

In a secondary battery using a pouch sheet as an exterior material, the pouch sheet accommodates and seals an electrode assembly. The pouch sheet may form a structure in which a plurality of layers are stacked. The pouch sheet may be molded to have an accommodation space by a die so that the electrode assembly is accommodated in the pouch sheet.

In order to increase an energy density of a battery cell, the accommodation space formed in the pouch sheet may deepens. As the accommodation space deepens, a difference in the degree of stretching between the layers constituting the pouch sheet may increase, which may lead to bending of the pouch sheet. If the pouch sheet is bent, a problem may occur in a process of attaching and sealing the pouch sheet.
(Patent Document 1) KR 10-2014-0091222 A

### SUMMARY

An object of the present disclosure is to address the above-described and other problems.

Another object of the present disclosure is to provide a pouch unit suppressing bending of a pouch sheet and a battery cell including the pouch unit.

Another object of the present disclosure is to provide a pouch unit including a notch portion concave on an inner surface of a pouch sheet and a battery cell including the pouch unit.

Another object of the present disclosure is to provide a pouch unit including a notch portion adjacent to an accommodation portion accommodating an electrode assembly and a battery cell including the pouch unit.

Another object of the present disclosure is to provide a pouch unit including a notch portion adjacent to a gas chamber portion and a battery cell including the pouch unit.

In order to achieve the above-described and other objects and needs, in one aspect of the present disclosure, there is provided a pouch unit comprising a pouch sheet having an inner surface and an outer surface opposite the inner surface; an accommodation portion formed on the pouch sheet, the accommodation portion forming an accommodation space that is open in a direction in which the inner surface faces; a perimeter portion formed on the pouch sheet, the perimeter portion being positioned between a perimeter of the pouch sheet and the accommodation portion; and a notch portion formed alongside a side of the accommodation portion at the perimeter portion, the notch portion being concave on the inner surface.

In another aspect of the present disclosure, there is provided a battery cell comprising an electrode assembly; and a pouch unit accommodating the electrode assembly, the pouch unit being sealed, wherein the pouch unit includes a pouch sheet having an inner surface contacting the electrode assembly and an outer surface opposite the inner surface; an accommodation portion formed on the pouch sheet and accommodating the electrode assembly, the accommodation portion including a first accommodation portion facing a surface of the electrode assembly and a second accommodation portion facing another surface of the electrode assembly; a first perimeter portion formed on the pouch sheet, the first perimeter portion extending from the first accommodation portion and leading to a first pouch side of the perimeter of the pouch sheet; a second perimeter portion formed on the pouch sheet, the second perimeter portion extending from the second accommodation portion and leading to a second pouch side of the perimeter of the pouch sheet, the second perimeter portion facing and contacting the first perimeter portion; a first notch portion extending alongside a side of the first accommodation portion at the first perimeter portion, the first notch portion being concave on the inner surface of the pouch sheet; and a second notch portion extending alongside a side of the second accommodation portion at the second perimeter portion, the second notch portion being concave on the inner surface of the pouch sheet.

In another aspect of the present disclosure, there is provided a method of manufacturing a pouch unit comprising bending a pouch sheet having an inner surface and an outer surface opposite the inner surface to form an accommodation portion configured to form an accommodation space that is open in a direction in which the inner surface faces; and forming a notch portion concave on the inner surface alongside a side of the accommodation portion at a perimeter portion, the perimeter portion being formed on the pouch sheet and being positioned between a perimeter of the pouch sheet and the accommodation portion.

Effects of a pouch unit and a battery cell including the same according to the present disclosure are described as follows.

According to at least one aspect of the present disclosure, the present disclosure can provide a pouch unit suppressing bending of a pouch sheet and a battery cell including the pouch unit.

According to at least one aspect of the present disclosure, the present disclosure can provide a pouch unit including a notch portion concave on an inner surface of a pouch sheet and a battery cell including the pouch unit.

According to at least one aspect of the present disclosure, the present disclosure can provide a pouch unit including a notch portion adjacent to an accommodation portion accommodating an electrode assembly and a battery cell including the pouch unit.

According to at least one aspect of the present disclosure, the present disclosure can provide a pouch unit including a notch portion adjacent to a gas chamber portion and a battery cell including the pouch unit.

Additional scope of applicability of the present disclosure will become apparent from the detailed description given blow. However, it should be understood that the detailed description and specific examples such as embodiments of the present disclosure are given merely by way of example, since various changes and modifications within the spirit and scope of the present disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 illustrates a pouch unit according to an embodiment of the present disclosure.
FIG. 2 illustrates a cross section of a pouch unit of FIG. 1 taken along A1-A2.
FIG. 3 illustrates that an accommodation portion is formed on a pouch sheet.
FIG. 4 illustrates a cross section of a pouch unit of FIG. 3 taken along B1-B2.
FIG. 5 illustrates that a perimeter portion bends due to formation of an accommodation portion.
FIG. 6 illustrates an area 'C' of FIG. 4 and illustrates that a notch is formed at a perimeter portion.
FIG. 7 illustrates an area 'D' of FIG. 4 and illustrates that a notch is formed at a perimeter portion.
FIG. 8 illustrates that a gas chamber is formed in a pouch unit of FIG. 3.
FIG. 9 illustrates a cross section of a pouch unit of FIG. 8 taken along E1-E2.
FIG. 10 illustrates an area 'F' of FIG. 8 and illustrates that a notch is formed at an outer perimeter portion.
FIG. 11 illustrates an area 'G' of FIG. 8 and illustrates that a notch is formed at an outer perimeter portion.
FIG. 12 illustrates a pouch unit provided with a notch segment.
FIG. 13 illustrates a cross section of a pouch unit of FIG. 12 taken along H1-H2.
FIG. 14 illustrates a pouch unit having a notch pattern in accordance with an embodiment of the present disclosure.
FIG. 15 illustrates a battery cell according to an embodiment of the present disclosure.
FIG. 16 illustrates a cross section of a battery cell of FIG. 15 taken along I1-I2.
FIG. 17 illustrates an area `J' of FIG. 16.
FIG. 18 is a flow chart illustrating a method of manufacturing a pouch unit according to an embodiment of the present disclosure.
FIG. 19 is a flow chart illustrating a pouch sheet bending step.
FIG. 20 is a flow chart illustrating a pouch sheet notching step.

### DETAILED DESCRIPTION

Reference will now be made in detail to embodiments of the disclosure, examples of which are illustrated in the accompanying drawings. Wherever possible, the same reference numbers will be used throughout the drawings to refer to the same or like parts. In general, a suffix such as "module" and "unit" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure. The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, etc. may be used to describe various components, but the components are not limited by such terms. The terms are used only for the purpose of distinguishing one component from other components.

When any component is described as "being connected" or "being coupled" to other component, this should be understood to mean that another component may exist between them, although any component may be directly connected or coupled to the other component. In contrast, when any component is described as "being directly connected" or "being directly coupled" to other component, this should be understood to mean that no component exists between them.

A singular expression can include a plural expression as long as it does not have an apparently different meaning in context.

In the present disclosure, terms "include" and "have" should be understood to be intended to designate that illustrated features, numbers, steps, operations, components, parts or combinations thereof are present and not to preclude the existence of one or more different features, numbers, steps, operations, components, parts or combinations thereof, or the possibility of the addition thereof.

In the drawings, sizes of the components may be exaggerated or reduced for convenience of explanation. For example, the size and the thickness of each component illustrated in the drawings are arbitrarily illustrated for convenience of explanation, and thus the present disclosure is not limited thereto unless specified as such.

If any embodiment is implementable differently, a specific order of processes may be performed differently from the order described. For example, two consecutively described processes may be performed substantially at the same time, or performed in the order opposite to the described order.

In the following embodiments, when layers, areas, components, etc. are connected, the following embodiments include both the case where layers, areas, and components are directly connected, and the case where layers, areas, and components are indirectly connected to other layers, areas, and components intervening between them. For example, when layers, areas, components, etc. are electrically connected, the present disclosure includes both the case where layers, areas, and components are directly electrically connected, and the case where layers, areas, and components are indirectly electrically connected to other layers, areas, and components intervening between them.

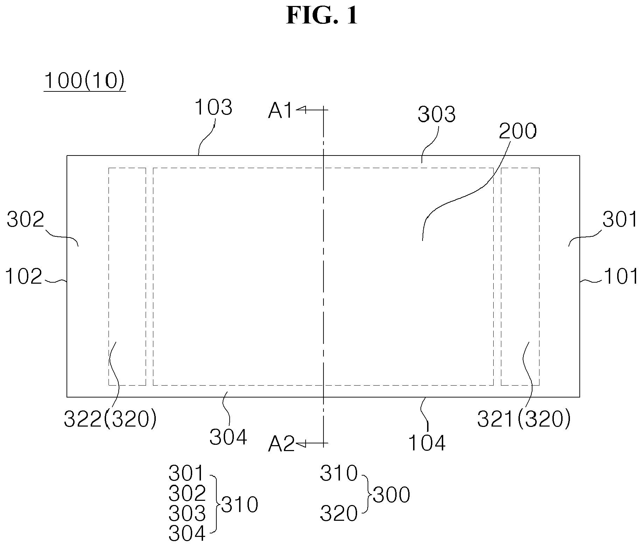

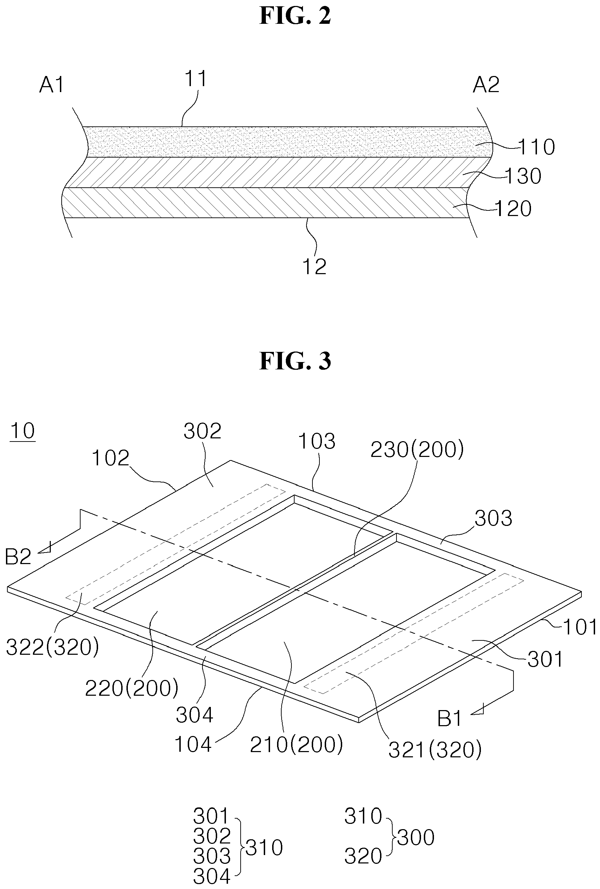

FIG. 1 illustrates a pouch unit according to an embodiment of the present disclosure. FIG. 2 illustrates a cross section of a pouch unit of FIG. 1 taken along A1-A2.

Referring to FIGS. 1 and 2, a pouch unit 10 according to an embodiment of the present disclosure may include a pouch sheet 100. The pouch sheet 100 may form a sheet shape.

For example, the pouch sheet 100 may form one surface and other surface. For example, the pouch unit 10 may include a first pouch surface 11 and a second pouch surface 12. The first pouch surface 11 may be the one surface of the pouch sheet 10. The second pouch surface 12 may be the other surface of the pouch sheet 100.

The pouch sheet 100 may form a side or an edge. For example, the pouch sheet 100 may form four sides. For example, the pouch sheet 100 may form a first pouch side 101, a second pouch side 102, a third pouch side 103, and a fourth pouch side 104. The pouch sides 101, 102, 103 and 104 may indicate at least one of the first pouch side 101, the second pouch side 102, the third pouch side 103, and the fourth pouch side 104.

The first pouch side 101 and the second pouch side 102 may be positioned opposite each other. The third pouch side 103 and the fourth pouch side 104 may be positioned opposite each other. The first pouch side 101 may be connected to one end of the third pouch side 103 and one end of the fourth pouch side 104. The second pouch side 102 may be connected to other end of the third pouch side 103 and other end of the fourth pouch side 104.

The pouch sheet 100 may form an area. For example, the pouch unit 10 may include a central portion 200. The central portion 200 may form a part of the area of the pouch sheet 100. The central portion 200 may be spaced apart from the pouch sides 101, 102, 103 and 104.

The pouch unit 10 may include a perimeter portion 300. The perimeter portion 300 may form another part of the area of the pouch sheet 100. The perimeter portion 300 may extend from the central portion 200 and lead to the pouch sides 101, 102, 103 and 104. The perimeter portion 300 may refer to an area between the central portion 200 and the pouch sides 101, 102, 103 and 104.

The perimeter portion 300 may include an outer perimeter portion 310 and an inner perimeter portion 320. The outer perimeter portion 310 may refer to an area connected to the pouch sides 101, 102, 103 and 104 in the perimeter portion 300.

For example, the outer perimeter portion 310 may include a first outer perimeter portion 301 connected to the first pouch side 101. For example, the outer perimeter portion 310 may include a second outer perimeter portion 302 connected to the second pouch side 102. For example, the outer perimeter portion 310 may include a third outer perimeter portion 303 connected to the third pouch side 103. For example, the outer perimeter portion 310 may include a fourth outer perimeter portion 304 connected to the fourth pouch side 104.

The inner perimeter portion 320 may refer to an area spaced apart from the pouch sides 101, 102, 103 and 104 in the perimeter portion 300. The inner perimeter portion 320 may refer to an area excluding the outer perimeter portion 310 from the perimeter portion 300.

For example, the inner perimeter portion 320 may include a first inner perimeter portion 321. The first inner perimeter portion 321 may be positioned between the first outer perimeter portion 301 and the central portion 200. The first inner perimeter portion 321 may be positioned between the third outer perimeter portion 303 and the fourth outer perimeter portion 304.

For example, the inner perimeter portion 320 may include a second inner perimeter portion 322. The second inner perimeter portion 322 may be positioned between the second outer perimeter portion 302 and the central portion 200. The second inner perimeter portion 322 may be positioned between the third outer perimeter portion 303 and the fourth outer perimeter portion 304.

The first perimeter portions 301 and 321 may indicate at least one of the first inner perimeter portion 321 and the first outer perimeter portion 301. The second perimeter portions 302 and 322 may indicate at least one of the second inner perimeter portion 322 and the second outer perimeter portion 302.

The pouch sheet 100 may form a stacked layer structure. For example, the pouch sheet 100 may include a first pouch layer 110. One surface of the first pouch layer 110 may form the first pouch surface 11. The first pouch layer 110 may be formed of a material containing synthetic resin.

For example, the pouch sheet 100 may include a second pouch layer 120. One surface of the second pouch layer 120 may face the first pouch layer 110. Other surface of the second pouch layer 120 may form the second pouch surface 12. The second pouch layer 120 may be formed of a material containing synthetic resin.

For example, the pouch sheet 100 may include a third pouch layer 130. The third pouch layer 130 may be disposed between the first pouch layer 110 and the second pouch layer 120. One surface of the third pouch layer 130 may be coupled to the other surface of the first pouch layer 110. Other surface of the third pouch layer 130 may be coupled to the one surface of the second pouch layer 120. The third pouch layer 130 may be formed of a material containing metal. For example, the third pouch layer 130 may be formed of a material containing aluminum.

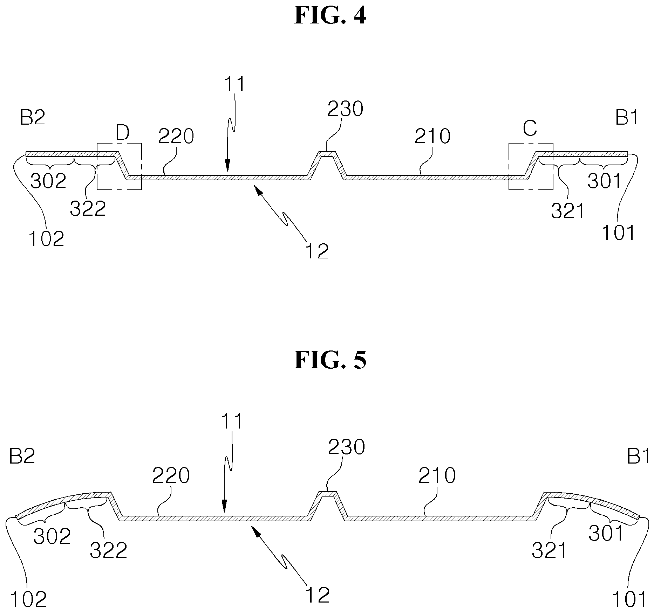

FIG. 3 illustrates that an accommodation portion is formed on a pouch sheet. FIG. 4 illustrates a cross section of a pouch unit of FIG. 3 taken along B1-B2.

Referring to FIGS. 3 and 4, the pouch unit 10 may include accommodation portions 210 and 220. When the pouch sheet 100 (see FIG. 1) is molded, the accommodation portions 210 and 220 may be formed in the central portion 200 (see FIG. 1). The accommodation portions 210 and 220 may accommodate at least a part of an electrode assembly.

The accommodation portions 210 and 220 may include a first accommodation portion 210 and a second accommodation portion 220. The accommodation portions 210 and 220 may indicate at least one of the first accommodation portion 210 and the second accommodation portion 220. The first accommodation portion 210 may be spaced apart from the second accommodation portion 220. A connection portion 230 may connect the first accommodation portion 210 and the second accommodation portion 220.

The first accommodation portion 210 and the second accommodation portion 220 may be disposed in parallel. For example, the first pouch side 101, the first accommodation portion 210, the second accommodation portion 220, and the second pouch side 102 may be sequentially disposed.

The first accommodation portion 210 may be disposed between the second accommodation portion 220 and the first pouch side 101. The second accommodation portion 220 may be disposed between the first accommodation portion 210 and the second pouch side 102.

The connection portion 230 may form a concave shape or a convex shape. For example, the connection portion 230 in the first pouch surface 11 may form a convex shape. For example, the connection portion 230 in the second pouch surface 12 may form a concave shape.

The accommodation portions 210 and 220 may form a concave shape or a convex shape. For example, the accommodation portions 210 and 220 in the first pouch surface 11 may form a concave shape.

For example, the accommodation portions 210 and 220 in the first pouch surface 11 may form an open space in a direction in which the first pouch surface 11 faces. For example, the accommodation portions 210 and 220 in the second pouch surface 12 may form a convex shape.

For example, the first accommodation portion 210 may form a first accommodation space opened in the direction in which the first pouch surface 11 faces. The first accommodation space of the first accommodation portion 210 may accommodate a part of the electrode assembly.

For example, the second accommodation portion 220 may form a second accommodation space opened in the direction in which the first pouch surface 11 faces. The second accommodation space of the second accommodation portion 220 may accommodate another part of the electrode assembly. The accommodation space may indicate at least one of the first accommodation space and the second accommodation space.

FIG. 5 illustrates that a perimeter portion bends due to formation of an accommodation portion.

Referring to FIGS. 3 to 5, in a process of molding the pouch sheet 100 to form the accommodation portions 210 and 220, the pouch sheet 100 may be stretched. For example, the pouch sheet 100 may be stretched at a boundary between the accommodation portions 210 and 220 and the perimeter portion 300. Due to this, a force directed toward the accommodation portions 210 and 220 may be formed in the perimeter portion 300.

The accommodation portions 210 and 220 may be concave in the first pouch surface 11 and convex in the second pouch surface 12. Due to this, a stretched length of the first pouch surface 11 and a stretched length of the second pouch surface 12 may be different from each other at the boundary between the accommodation portions 210 and 220 and the perimeter portion 300. For example, at the boundary between the accommodation portions 210 and 220 and the perimeter portion 300, the stretched length of the second pouch surface 12 may be greater than the stretched length of the first pouch surface 11.

Hence, a magnitude of a force that is formed in the second pouch surface 12 of the perimeter portion 300 and is directed toward the accommodation portions 210 and 220 may be greater than a magnitude of a force that is formed in the first pouch surface 11 of the perimeter portion 300 and is directed toward the accommodation portions 210 and 220. As a result, the perimeter portion 300 may be bent in a direction in which the second pouch surface 12 faces.

The perimeter portion 300 of the pouch unit 10 (see FIG. 1) may overlap and be coupled to each other after at least a part of the electrode assembly is accommodated in the accommodation portions 210 and 220. The first pouch surface 11 may face and contact at least a part of the electrode assembly. The second pouch surface 11 may form an outer surface of the battery cell.

When the perimeter portion 300 is bent in the direction in which the second pouch surface 12 faces, it may be difficult to attach the perimeter portion 300 facing each other. Therefore, it is necessary to flatten the bent perimeter portion 300.

In order to flatten the bent perimeter portion 300, heat may be applied to the perimeter portion 300. Alternatively, a pressure may be applied to the perimeter portion 300 while applying heat to the perimeter portion 300. However, even if heat is applied to the bent perimeter portion 300 or even if both heat and pressure are applied to the bent perimeter portion 300, the bent perimeter portion 300 may be bent again after being flattened.

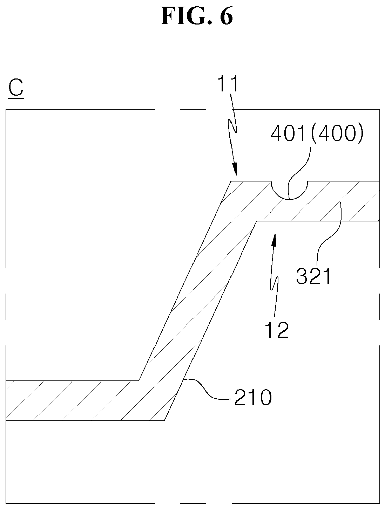

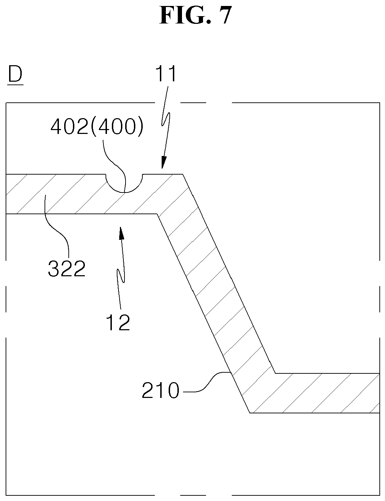

FIG. 6 illustrates an area 'C' of FIG. 4 and illustrates that a notch is formed at a perimeter portion. FIG. 7 illustrates an area 'D' of FIG. 4 and illustrates that a notch is formed at a perimeter portion.

Referring to FIGS. 6 and 7, the pouch unit 10 (see FIG. 3) may include a notch portion 400. The notch portion 400 may be formed or positioned at the perimeter portion 300 (see FIG. 3). For example, the notch portion 400 may be formed or positioned in one surface of the perimeter portion 300 (see FIG. 3). For example, the notch portion 400 may be formed or positioned in the first pouch surface 11 of the perimeter portion 300 (see FIG. 3).

For example, the notch portion 400 may be concave on the first pouch surface 11 of the perimeter portion 300 (see FIG. 3). A thickness of the pouch sheet 100 (see FIG. 1) at the notch portion 400 may be less than a thickness of the pouch sheet 100 (see FIG. 1) in another area. For example, the notch portion 400 may be adjacent to the boundary between the accommodation portions 210 and 220 and the perimeter portion 300 (see FIG. 3).

The notch portion 400 may be formed by a die. For example, the notch portion 400 may be formed by applying pressure to a part of the perimeter portion 300 (see FIG. 3). By forming or positioning the notch portion 400 in the first pouch surface 11 to be adjacent to the boundary between the accommodation portions 210 and 220 and the perimeter portion 300 (see FIG. 3), a bending phenomenon of the perimeter portion 300 (see FIG. 3) can be compensated.

For example, when the notch portion 400 is formed on the first pouch surface 11 of the perimeter portion 300 (see FIG. 3), a force directed toward the notch portion 400 may be formed on the first pouch surface 11 of the perimeter portion 300 (see FIG. 3) or the first pouch layer 110 (see FIG. 2).

The force directed toward the notch portion 400 in the first pouch surface 11 of the perimeter portion 300 (see FIG. 3) or the first pouch layer 110 (see FIG. 2) may correspond to a force applied to the second pouch surface 12 of the perimeter portion 300 (see FIG. 3) or the second pouch layer 120 (see FIG. 2) due to the formation of the accommodation portions 210 and 220.

In other words, the bending phenomenon of the perimeter portion 300 (see FIG. 3) illustrated in FIG. 5 can be alleviated by forming the notch portion 400 in the first pouch surface 11 of the perimeter portion 300 (see FIG. 3).

A plurality of notch portions 400 may be provided. For example, the notch portion 400 may include a first notch portion 401 and a second notch portion 402. The first notch portion 401 may be positioned between the first accommodation portion 210 and the first pouch side 101 (see FIG. 4). The first notch portion 401 may be adjacent to the first accommodation portion 210. The second notch portion 402 may be positioned between the second accommodation portion 220 and the second pouch side 102 (see FIG. 4). The second notch portion 402 may be adjacent to the second accommodation portion 220.

Referring to FIGS. 1 to 7, the notch portion 400 may be formed at the perimeter portion 300. For example, the notch portion 400 may be formed on the first pouch surface 11 of the perimeter portion 300. For example, the notch portion 400 may be positioned in the perimeter portion 300 and may be formed alongside one side of the accommodation portions 210 and 220.

For example, the notch portion 400 may be formed alongside long edges of the accommodation portions 210 and 220. A long side of the first accommodation portion 210 and a long side of the second accommodation portion 220 may be positioned opposite each other in the pouch sheet 100.

For example, the first notch portion 401 may be formed between the long side of the first accommodation portion 210 and the first pouch side 101 alongside the long side of the first accommodation portion 210. For example, the second notch portion 402 may be formed between the long side of the second accommodation portion 220 and the second pouch side 102 alongside the long side of the second accommodation portion 220.

For another example, the notch portion 400 may be formed alongside short edges of the accommodation portions 210 and 220. A ratio of the long side to the short side of the accommodation portions 210 and 220 may be referred to as an aspect ratio. The aspect ratio may be 1 or more.

As the aspect ratio increases, the possibility of the bending phenomenon appearing in the perimeter portion 300 adjacent to the short sides of the accommodation portions 210 and 220 may decrease. As the aspect ratio decreases, the possibility of the bending phenomenon appearing in the perimeter portion 300 adj acent to the short sides of the accommodation portions 210 and 220 may increase.

When the aspect ratio is relatively small, the notch portion 400 formed alongside the short sides of the accommodation portions 210 and 220 can effectively suppress the bending phenomenon appearing in the perimeter portion 300 adjacent to the short sides of the accommodation portions 210 and 220.

For example, the notch portion 400 may be formed alongside the upper side of the accommodation portions 210 and 220 and positioned between the third pouch side 103 and the accommodation portions 210 and 220. For example, the notch portion 400 may be formed alongside the lower side of the accommodation portions 210 and 220 and positioned between the fourth pouch side 103 and the accommodation portions 210 and 220.

The notch portion 400 may be formed at the perimeter portion 300 after heat is applied to the perimeter portion 300. For another example, heat may be applied to the perimeter portion 300 while the notch portion 400 is formed at the perimeter portion 300. For another example, after the notch portion 400 is formed at the perimeter portion 300, heat may be applied to the perimeter portion 300.

The notch portion 400 may be formed at the perimeter portion 300 after heat and pressure are applied to the perimeter portion 300. For another example, heat and pressure may be applied to the perimeter portion 300 while the notch portion 400 is formed at the perimeter portion 300. For another example, after the notch portion 400 is formed at the perimeter portion 300, heat and pressure may be applied to the perimeter portion 300.

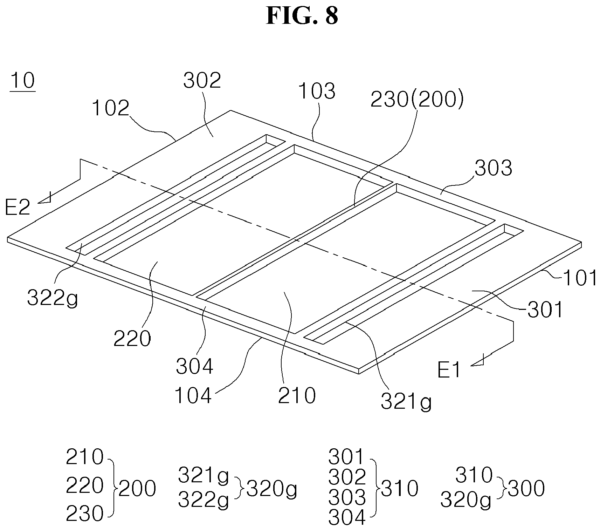

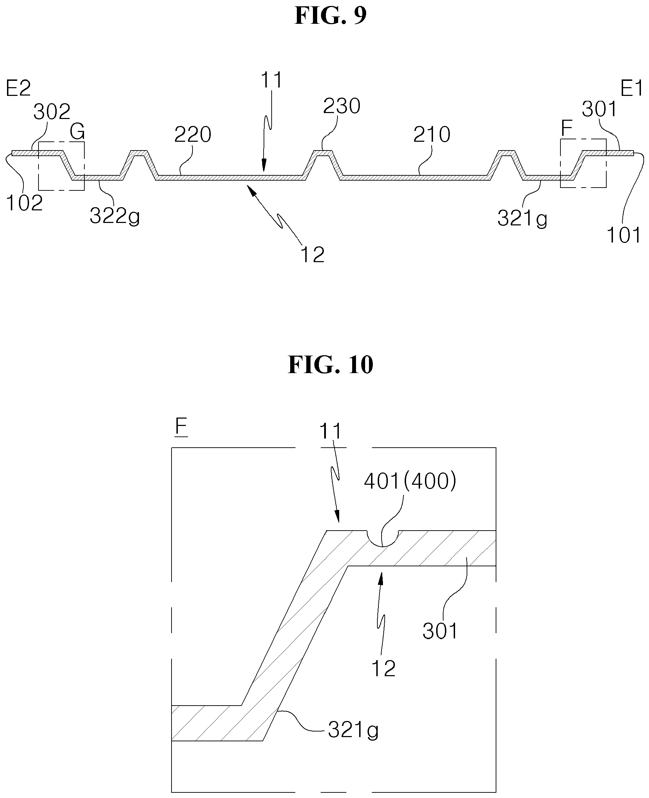

FIG. 8 illustrates that a gas chamber is formed in a pouch unit of FIG. 3. FIG. 9 illustrates a cross section of a pouch unit of FIG. 8 taken along E1-E2.

Referring to FIGS. 8 and 9, the pouch unit 10 may include a gas chamber portion 320g. The gas chamber portion 320g may be formed at the inner perimeter portion 320 (see FIG. 3). The gas chamber portion 320g may form a concave shape or a convex shape.

For example, the gas chamber portion 320g in the first pouch surface 11 may form a concave shape. For example, the gas chamber portion 320g in the first pouch surface 11 may form an open space (or a hollow portion) in the direction in which the first pouch surface 11 faces. For example, the gas chamber portion 320g in the second pouch surface 12 may form a convex shape.

The gas chamber portion 320g may include a first gas chamber portion 321g and a second gas chamber portion 322g. The first gas chamber portion 321g, the first accommodation portion 210, the second accommodation portion 220, and the second gas chamber portion 322g may be disposed sequentially. The gas chamber portion 320g may indicate at least one of the first gas chamber portion 321g and the second gas chamber portion 322g.

The first gas chamber portion 321g may be formed at the first inner perimeter portion 321 (see FIG. 3). The first gas chamber portion 321g may be adjacent to the first accommodation portion 210. The first gas chamber portion 321g may be formed or positioned between the first accommodation portion 210 and the first pouch side 101. The first gas chamber portion 321g may form a first hollow portion opened in the direction in which the first pouch surface 11 faces.

The second gas chamber portion 322g may be formed at the second inner perimeter portion 322 (see FIG. 3). The second gas chamber portion 322g may be adjacent to the second accommodation portion 220. The second gas chamber portion 322g may be formed or positioned between the second accommodation portion 220 and the second pouch side 102. The second gas chamber portion 322g may form a second hollow portion opened in the direction in which the first pouch surface 11 faces.

The gas chamber portion 320g may be concave in the first pouch surface 11 and convex in the second pouch surface 12. Due to this, a stretched length of the first pouch surface 11 and a stretched length of the second pouch surface 12 may be different from each other at a boundary between the gas chamber portion 320g and the outer perimeter portion 310.

For example, at the boundary between the gas chamber portion 320g and the outer perimeter portion 310, the stretched length of the first pouch surface 11 or the first pouch layer 110 (see FIG. 2) may be greater than the stretched length of the second pouch surface 12 or the second pouch layer 120 (see FIG. 2).

Hence, a magnitude of a force that is formed in the second pouch surface 12 of the outer perimeter portion 310 and is directed toward the gas chamber portion 320g may be greater than a magnitude of a force that is formed in the first pouch surface 11 of the outer perimeter portion 310 and is directed toward the gas chamber portion 320g.

For example, a magnitude of a force that is formed in the second pouch surface 12 of the first outer perimeter portion 301 and is directed toward the first gas chamber portion 321g may be greater than a magnitude of a force that is formed in the first pouch surface 11 of the first outer perimeter portion 301 and is directed toward the first gas chamber portion 321g.

For example, a magnitude of a force that is formed in the second pouch surface 12 of the second outer perimeter portion 302 and is directed toward the second gas chamber portion 322g may be greater than a magnitude of a force that is formed in the first pouch surface 11 of the second outer perimeter portion 302 and is directed toward the second gas chamber portion 322g.

Hence, the first outer perimeter portion 301 may be bent in the direction in which the second pouch surface 12 faces, and the second outer perimeter portion 302 may be bent in the direction in which the second pouch surface 12 faces.

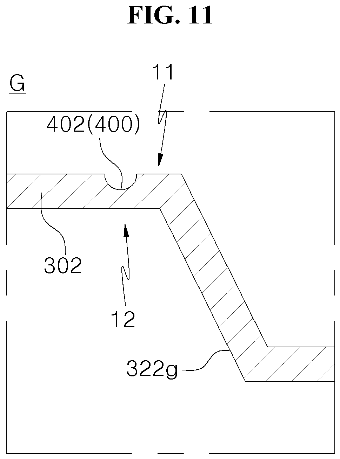

FIG. 10 illustrates an area 'F' of FIG. 8 and illustrates that a notch is formed at an outer perimeter portion. FIG. 11 illustrates an area 'G' of FIG. 8 and illustrates that a notch is formed at an outer perimeter portion.

Referring to FIG. 10 and 11, the pouch unit 10 (see FIG. 8) may include the notch portion 400. The notch portion 400 may be formed or positioned in the outer perimeter portion 310 (see FIG. 8). For example, the notch portion 400 may be formed or positioned in the first pouch surface 11 of the outer perimeter portion 310 (see FIG. 8). The notch portion 400 may include the first notch portion 401 and the second notch portion 402.

The notch portion 400 may be concave on the first pouch surface 11 of the outer perimeter portion 310 (see FIG. 8). A thickness of the pouch sheet 100 (see FIG. 1) at the notch portion 400 may be less than a thickness of the pouch sheet 100 (see FIG. 1) in another area. For example, the notch portion 400 may be adjacent to a boundary between the gas chamber portion 320g and the outer perimeter portion 310.

The shape and manufacturing process of the notch portion 400 illustrated in FIGS. 10 and 11 may be substantially the same as the shape and manufacturing process of the notch portion 400 illustrated in FIGS. 6 and 7. The notch portion 400 illustrated in FIGS. 10 and 11 may be distinguished from the notch portion 400 illustrated in FIGS. 6 and 7.

For example, the notch portion 400 illustrated in FIGS. 10 and 11 may be referred to as an "outer notch portion", and the notch portion 400 illustrated in FIGS. 6 and 7 may be referred to as an "inner notch portion". The inner notch portion 400 (see FIGS. 6 and 7) may be formed or disposed between the accommodation portions 210 and 220 and the gas chamber portion 320g.

The first notch portion 401 may be formed or positioned in the first outer perimeter portion 301. The first notch portion 401 may be disposed between the first gas chamber portion 321g (see FIG. 8) and the first pouch side 101 (see FIG. 8). The first notch portion 401 may be adjacent to a boundary between the first gas chamber portion 321g (see FIG. 8) and the first outer perimeter portion 301.

The second notch portion 402 may be formed or positioned in the second outer perimeter portion 302. The second notch portion 402 may be disposed between the second gas chamber portion 322g (see FIG. 8) and the second pouch side 102 (see FIG. 8). The second notch portion 402 may be adjacent to a boundary between the second gas chamber portion 322g (see FIG. 8) and the second outer perimeter portion 302.

Referring to FIGS. 1 to 11, the notch portion 400 may form an extended shape in one direction. The notch portion 400 may form an elongated shape in one direction. For example, the notch portion 400 may form an extended shape or an elongated shape in a longitudinal direction of the pouch unit 10.

The longitudinal direction of the pouch unit 10 may be a direction across a width direction of the pouch unit 10. The width direction of the pouch unit 10 may be a direction in which the first accommodation portion 210 and the second accommodation portion 220 are disposed in parallel.

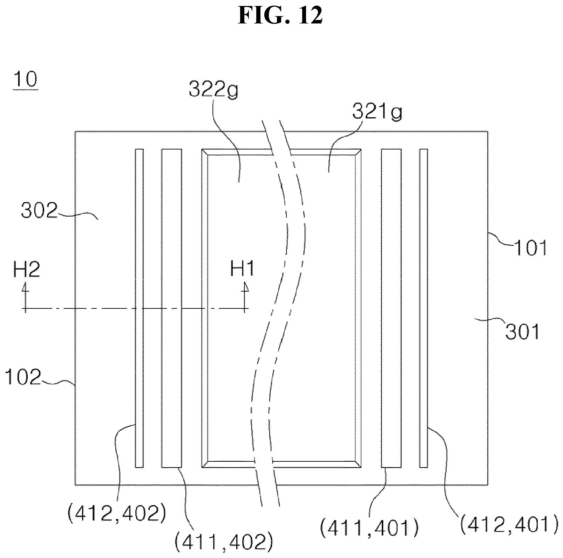

FIG. 12 illustrates a pouch unit provided with a notch segment. In FIG. 12, the first pouch surface 11 (see FIG. 9) of the pouch unit 10 may be observed.

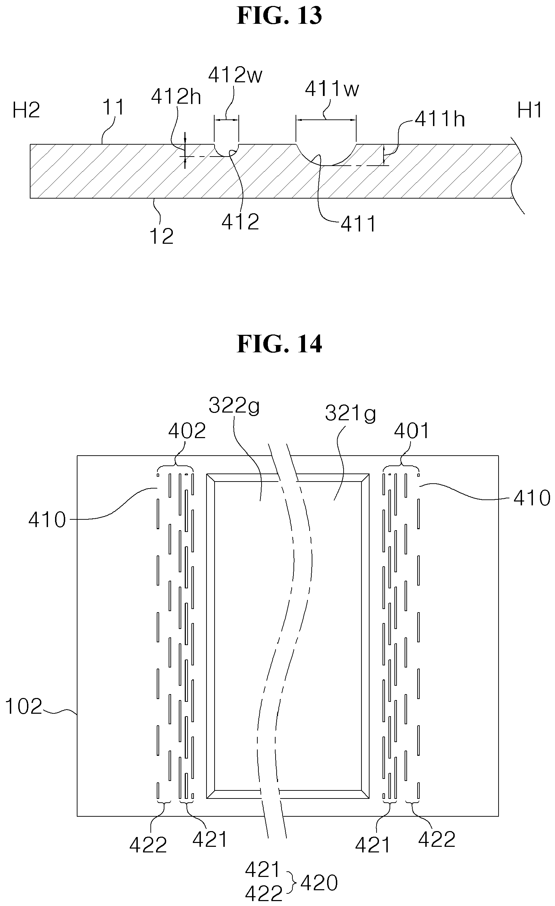

FIG. 13 illustrates a cross section of a pouch unit of FIG. 12 taken along H1-H2.

Referring to FIGS. 12 and 13, the notch portion 400 may include a notch segment 410. For example, a plurality of notch segments 410 may be provided. For example, the plurality of notch segments 410 may include a first notch segment 411 and a second notch segment 412.

The notch portion 400 may include the first notch portion 401 and the second notch portion 402. The first notch portion 401 may be positioned between the first gas chamber portion 321g and the first pouch side 101. The second notch portion 402 may be positioned between the second gas chamber portion 322g and the second pouch side 102.

Each of the first notch portion 401 and the second notch portion 402 may include a plurality of notch segments 410. For example, each of the first notch portion 401 and the second notch portion 402 may include a first notch segment 411 and a second notch segment 412.

The notch segment 410 may form an extended shape or an elongated shape in the longitudinal direction of the pouch unit 10. The first notch segment 411 may be disposed between the gas chamber portion 320g and the second notch segment 412.

The notch segment 410 may be recessed in the first pouch surface 11 of the outer perimeter portion 310. A first notch depth 411h may indicate a recessed depth of the first notch segment 411 in the first pouch surface 11. A second notch depth 412h may indicate a recessed depth of the second notch segment 412 in the first pouch surface 11. The first notch depth 411h may be greater than the second notch depth 412h.

A first notch width 411w may indicate a width of the first notch segment 411 defined in the first pouch surface 11. A second notch width 412w may indicate a width of the second notch segment 412 defined in the first pouch surface 11. The first notch width 411w may be greater than the second notch width 412w.

As above, the first notch segment 411 and the second notch segment 412 are formed at the outer perimeter portion 310, and thus the bending phenomenon of the outer perimeter portion 310 can be alleviated more effectively.

FIG. 14 illustrates a pouch unit having a notch pattern in accordance with an embodiment of the present disclosure. In FIG. 14, the first pouch surface 11 (see FIG. 9) of the pouch unit 10 may be observed.

Referring to FIG. 14, the notch portion 400 may include the first notch portion 401 and the second notch portion 402. The first notch portion 401 may be positioned between the first gas chamber portion 321g and the first pouch side 101. The second notch portion 402 may be positioned between the second gas chamber portion 322g and the second pouch side 102.

The notch portion 400 may include a plurality of notch segments 410. The plurality of notch segments 410 may form a notch pattern 420. Each of the first notch portion 401 and the second notch portion 402 may include the notch pattern 420.

The notch pattern 420 may include a first notch pattern 421 and a second notch pattern 422. The first notch pattern 421 may be positioned between the gas chamber portion 320g and the second notch pattern 422.

Each of the first notch pattern 421 and the second notch pattern 422 may include a plurality of notch segments 410. A number density of the first notch pattern 421 may be different from a number density of the second notch pattern 422. The number density of the first notch pattern 421 may be greater than the number density of the second notch pattern 422.

The number density of the first notch pattern 421 may be a number density of the plurality of notch segments 410 included in the first notch pattern 421. The number density of the second notch pattern 422 may be a number density of the plurality of notch segments 410 included in the second notch pattern 422. The number density may be the number of notch segments 410 per unit area of the pouch sheet 100 (see FIG. 1).

For example, the number density of the plurality of notch segments 410 positioned in the first outer perimeter portion 301 may decrease as it goes from the first gas chamber portion 321g to the first pouch side 101.

For example, the number density of the plurality of notch segments 410 positioned in the second outer perimeter portion 302 may decrease as it goes from the second gas chamber portion 322g to the second pouch side 102.

As above, the notch pattern 420 with a number density profile illustrated in FIG. 14 is formed on the outer perimeter portion 310, and thus the bending phenomenon of the outer perimeter portion 310 can be alleviated more effectively.

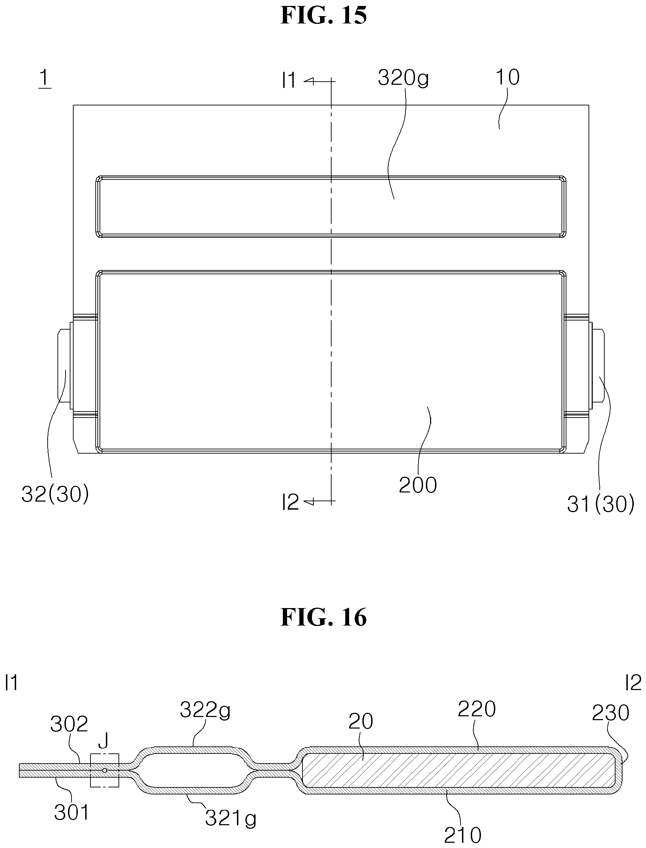

FIG. 15 illustrates a battery cell according to an embodiment of the present disclosure. FIG. 16 illustrates a cross section of a battery cell of FIG. 15 taken along I1-I2.

Referring to FIGS. 15 and 16, the battery cell 1 may include the pouch unit 10. The pouch unit 10 may form a sealed pouch bag. The battery cell 1 may include an electrode assembly 20. The sealed pouch bag of the pouch unit 10 may accommodate the electrode assembly 20.

The electrode assembly 20 may extend from one end and lead to other end. For example, the electrode assembly 20 may extend from one end in the longitudinal direction and lead to other end. The longitudinal direction of the electrode assembly 20 may be the longitudinal direction of the pouch unit 10.

The battery cell 1 may include an electrode lead 30. A plurality of electrode leads 30 may be provided. The plurality of electrode leads 30 may include a first electrode lead 31 and a second electrode lead 32. The first electrode lead 31 may be connected to the one end of the electrode assembly 20. The second electrode lead 32 may be connected to the other end of the electrode assembly 20.

The first accommodation portion 210 may face one surface of the electrode assembly 20. The first accommodation portion 210 may accommodate a part of the electrode assembly 20. The second accommodation portion 220 may face another surface of the electrode assembly 20. The second accommodation portion 220 may accommodate another part of the electrode assembly 20.

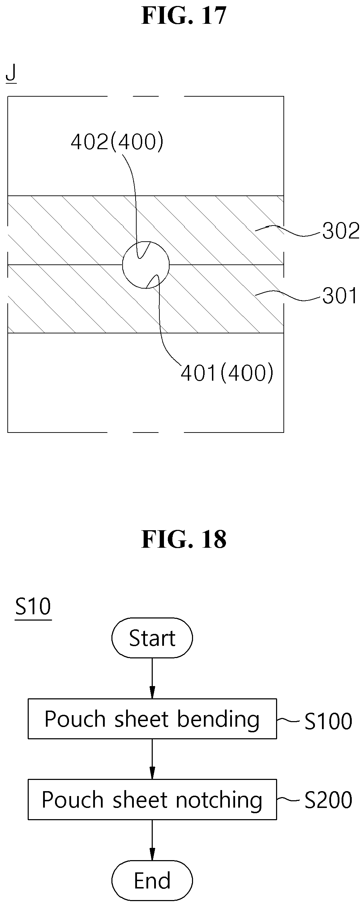

FIG. 17 illustrates an area `J' of FIG. 16.

Referring to FIGS. 15 to 17, the pouch unit 10 accommodating the electrode assembly 20 may be folded and sealed. For example, the first accommodation portion 210 and the second accommodation portion 220 may be disposed to face each other. For example, the first gas chamber portion 321g and the second gas chamber portion 322g may be disposed to face each other. For example, the first outer perimeter portion 301 and the second outer perimeter portion 302 may be attached and coupled to each other while facing each other.

When the gas chamber portion 320g is formed, the first outer perimeter portion 301 and the second outer perimeter portion 302 may receive a bending force in a direction away from each other. Since the notch portion 400 is formed at the first outer perimeter portion 301 and the second outer perimeter portion 302, the first outer perimeter portion 301 and the second outer perimeter portion 302 can be effectively coupled to each other.

The first notch portion 401 may be formed at the first outer perimeter portion 301. The second notch portion 402 may be formed at the second outer perimeter portion 302. The first notch portion 401 and the second notch portion 402 may face each other. The first notch portion 401 may be concave with reference to the second outer perimeter portion 302. The second notch portion 402 may be concave with reference to the first outer perimeter portion 301.

FIG. 18 is a flow chart illustrating a method of manufacturing a pouch unit according to an embodiment of the present disclosure.

Referring to FIGS. 1 to 18, a method S10 of manufacturing the pouch unit may include a step S100 of bending the pouch sheet 100. In the step S100, the pouch sheet 100 may be molded by being pressed by a die. In the step S100, the accommodation portions 210 and 220 and/or the gas chamber portion 320g may be formed.

The method S10 of manufacturing the pouch unit may include a step S200 of notching the pouch sheet 100. In the step S200, pressure may be applied to the pouch sheet 100 to form the notch portion 400.

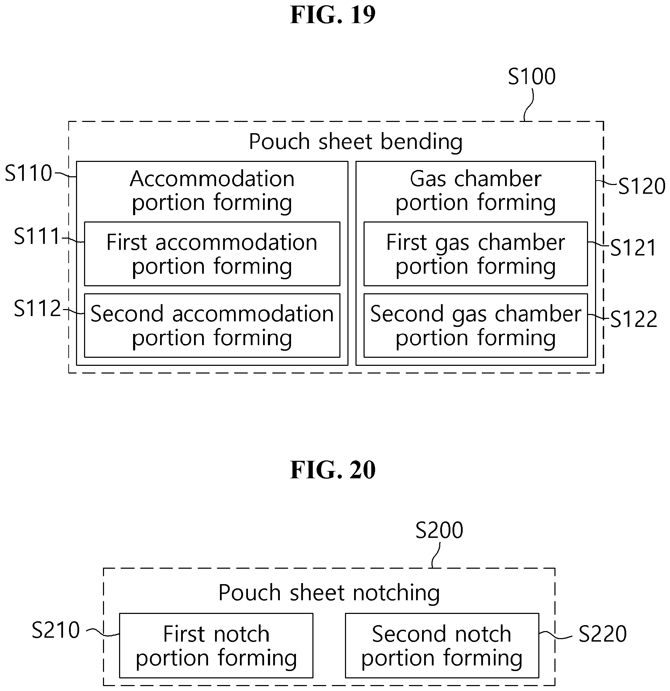

FIG. 19 is a flow chart illustrating a pouch sheet bending step.

Referring to FIGS. 1 to 19, the pouch sheet bending step S100 may include a step S110 of forming the accommodation portion. In the step S110, the accommodation portions 210 and 220 may be formed on the pouch sheet 100.

The accommodation portion forming step S110 may include a first accommodation portion forming step S111 and a second accommodation portion forming step S112. In the first accommodation portion forming step 5111, the first accommodation portion 210 may be formed on the pouch sheet 100. In the second accommodation portion forming step S112, the second accommodation portion 220 may be formed on the pouch sheet 100. The first accommodation portion forming step S111 and the second accommodation portion forming step S112 may be performed at the same time.

The pouch sheet bending step S100 may include a step S120 of forming the gas chamber portion. In the step S120, the gas chamber portion 320g may be formed on the pouch sheet 100. The gas chamber portion forming step S120 and the accommodation portion forming step S110 may be performed at the same time.

The gas chamber portion forming step S120 may include a first gas chamber portion forming step S121 and a second gas chamber portion forming step S122. In the first gas chamber portion forming step S121, the first gas chamber portion 321g may be formed in the pouch sheet 100. In the second gas chamber portion forming step S122, the second gas chamber portion 322g may be formed in the pouch sheet 100. The first gas chamber portion forming step S121 and the second gas chamber portion forming step S122 may be performed at the same time.

FIG. 20 is a flow chart illustrating a pouch sheet notching step.

Referring to FIGS. 1 to 20, the pouch sheet notching step S200 may include a first notch portion forming step S210 and a second notch portion forming step S220. In the first notch portion forming step S210, the first notch portion 401 may be formed on the pouch sheet 100. In the second notch portion forming step S220, the second notch portion 402 may be formed on the pouch sheet 100. The first notch portion forming step S210 and the second notch portion forming step S220 may be performed at the same time.

Each of the first notch portion forming step S210 and the second notch portion forming step S220 may include a step of applying at least one of heat and pressure to the perimeter portion 300. That is, in a process of forming the notch portion 400, heat or/and pressure may be applied to the perimeter portion 300.

The notch portion 400 may be positioned between the accommodation portions 210 and 220 and the gas chamber portions 321g and 322g. For example, the first notch portion 401 may be positioned between the first accommodation portion 210 and the first gas chamber portion 321g on the pouch sheet 100. For example, the second notch portion 402 may be positioned between the second accommodation portion 220 and the second gas chamber portion 322g on the pouch sheet 100.

Hence, a phenomenon in which the gas chamber portions 321g and 322g are bent with respect to the accommodation portions 210 and 220 can be suppressed. For example, as the first notch portion 401 is formed between the first accommodation portion 210 and the first gas chamber portion 321g on the pouch sheet 100, a phenomenon in which the first gas chamber portion 321g are bent with respect to the first accommodation portion 210 can be suppressed. For example, as the second notch portion 402 is formed between the second accommodation portion 220 and the second gas chamber portion 322g on the pouch sheet 100, a phenomenon in which the second gas chamber portion 322g are bent with respect to the second accommodation portion 210 can be suppressed.

Some embodiments or other embodiments of the present disclosure described above are not mutually exclusive or distinct from each other. Configurations or functions of some embodiments or other embodiments of the present disclosure described above can be used together or combined with each other.

It is apparent to those skilled in the art that the present disclosure can be embodied in other specific forms without departing from the spirit and essential features of the present disclosure. Accordingly, the above detailed description should not be construed as limiting in all aspects and should be considered as illustrative. The scope of the present disclosure should be determined by rational interpretation of the appended claims, and all modifications within an equivalent scope of the present disclosure are included in the scope of the present disclosure.

## Claims

1. A pouch unit (10) comprising:
a pouch sheet (100) having an inner surface and an outer surface opposite the inner surface;
an accommodation portion formed on the pouch sheet (100), the accommodation portion forming an accommodation space that is open in a direction in which the inner surface faces;
a perimeter portion (300) formed on the pouch sheet (100), the perimeter portion (300) being positioned between a perimeter of the pouch sheet (100) and the accommodation portion; and
a notch portion (400) formed alongside a side of the accommodation portion at the perimeter portion (300), the notch portion (400) being concave on the inner surface.

2. The pouch unit of claim 1, wherein a thickness of the pouch sheet (100) in the notch portion is smaller than a thickness of the pouch sheet (100) in another area of the pouch sheet (100).

3. The pouch unit of claim 1 or 2, wherein the notch portion (400) includes:
a first notch portion (401) formed alongside a first side of the accommodation portion at the perimeter portion (300), the first notch portion (401) being concave on the inner surface; and
a second notch portion (402) formed alongside a second side of the accommodation portion at the perimeter portion (300), the second notch portion (402) being concave on the inner surface,
wherein the accommodation portion is positioned between the first notch portion (401) and the second notch portion (402).

4. The pouch unit of claim 3, wherein the accommodation portion includes:
a first accommodation portion (210) formed on the pouch sheet (100), the first accommodation portion (210) forming a first accommodation space that is open in the direction in which the inner surface faces, the first accommodation portion (210) being adjacent to the first notch portion (401); and
a second accommodation portion (220) formed on the pouch sheet (100), the second accommodation portion (220) forming a second accommodation space that is open in the direction in which the inner surface faces, the second accommodation portion (220) being adjacent to the second notch portion (402), preferably wherein the first accommodation portion (210) is positioned between the second accommodation portion (220) and the first notch portion (401), and
wherein the second accommodation portion (220) is positioned between the first accommodation portion (210) and the second notch portion (402).

5. The pouch unit of claim 4, further comprising:
a first gas chamber portion (321g) formed at the perimeter portion (300) and adjacent to the first accommodation portion (210), the first gas chamber portion (321g) forming a first hollow portion that is open in the direction in which the inner surface faces; and
a second gas chamber portion (322g) formed at the perimeter portion (300) and adjacent to the second accommodation portion (220), the second gas chamber portion (322g) forming a second hollow portion that is open in the direction in which the inner surface faces.

6. The pouch unit of claim 5, wherein the first gas chamber portion (321g) is positioned between the first notch portion (401) and the first accommodation portion (210), and
wherein the second gas chamber portion (322g) is positioned between the second notch portion (402) and the second accommodation portion (220), or wherein the first notch portion (401) is positioned between the first accommodation portion (210) and the first gas chamber portion (321g), and
wherein the second notch portion (402) is positioned between the second accommodation portion (220) and the second gas chamber portion (322g).

7. The pouch unit of any one of claims 3 to 6, wherein each of the first notch portion (401) and the second notch portion (402) includes a first notch segment (411) and a second notch segment (412),
preferably wherein a first notch depth (411h) indicates a recessed depth of the first notch segment (411) and a second notch depth (412h) indicates a recessed depth of the second notch segment (412),
more preferably wherein the first notch depth (411h) is greater than the second notch depth (412h).

8. The pouch unit of any one of claims 3 to 7, wherein each of a first notch pattern (421) in the first notch portion (401) and a second notch pattern (422) in the second notch portion (402) includes a plurality of first notch segments (411) and second notch segments (412),
preferably wherein a number density of the first notch pattern (421) is greater than the number density of the second notch pattern 422.

9. A battery cell comprising:
an electrode assembly; and
a pouch unit accommodating the electrode assembly, the pouch unit being sealed,
wherein the pouch unit includes:
a pouch sheet (100) having an inner surface contacting the electrode assembly and an outer surface opposite the inner surface;
an accommodation portion formed on the pouch sheet (100) and accommodating the electrode assembly, the accommodation portion including a first accommodation portion (210) facing a surface of the electrode assembly and a second accommodation portion (220) facing another surface of the electrode assembly;
a first perimeter portion formed on the pouch sheet (100), the first perimeter portion extending from the first accommodation portion (210) and leading to a first pouch side of the perimeter of the pouch sheet (100);
a second perimeter portion formed on the pouch sheet (100), the second perimeter portion extending from the second accommodation portion (220) and leading to a second pouch side of the perimeter of the pouch sheet (100), the second perimeter portion facing and contacting the first perimeter portion;
a first notch portion (401) extending alongside a side of the first accommodation portion (210) at the first perimeter portion, the first notch portion (401) being concave on the inner surface of the pouch sheet (100); and
a second notch portion (402) extending alongside a side of the second accommodation portion (220) at the second perimeter portion, the second notch portion (402) being concave on the inner surface of the pouch sheet (100).

10. The battery cell of claim 9, wherein the first perimeter portion and the second perimeter portion face each other and are coupled to each other.

11. The battery cell of claim 9 or 10, wherein the first notch portion (401) and the second notch portion (402) face each other.
preferably wherein the first notch portion (401) is concave with reference to the second notch portion (402), and/or
wherein the second notch portion (402) is concave with reference to the first notch portion (401).

12. The battery cell of any one of claims 9 to 11, wherein the pouch unit further includes:
a first gas chamber portion (321g) formed at the first perimeter portion and concave with reference to the second perimeter portion, the first gas chamber portion (321g) being positioned between the first accommodation portion (210) and the first notch portion (401) on the pouch sheet (100); and
a second gas chamber portion (322g) formed at the second perimeter portion and concave with reference to the first gas chamber portion (321g), the second gas chamber portion (322g) being positioned between the second accommodation portion (220) and the second notch portion (402) on the pouch sheet (100); or wherein the pouch unit further includes:
a first gas chamber portion (321g) formed at the first perimeter portion and concave with reference to the second perimeter portion; and
a second gas chamber portion (322g) formed at the second perimeter portion and concave with reference to the first perimeter portion,
wherein the first notch portion (401) is positioned between the first accommodation portion (210) and the first gas chamber portion (321g) on the pouch sheet (100), and
wherein the second notch portion (402) is positioned between the second accommodation portion (220) and the second gas chamber portion (322g) on the pouch sheet (100).

13. A method of manufacturing a pouch unit comprising:
bending a pouch sheet (100) having an inner surface and an outer surface opposite the inner surface to form an accommodation portion configured to form an accommodation space that is open in a direction in which the inner surface faces; and
forming a notch portion concave on the inner surface alongside a side of the accommodation portion at a perimeter portion (300), the perimeter portion (300) being formed on the pouch sheet (100) and being positioned between a perimeter of the pouch sheet (100) and the accommodation portion.

14. A method of claim 13, wherein bending a pouch sheet comprising:
forming accommodation portions (210, 220) on the pouch sheet 100, and
forming gas chamber portions (321g, 322g) at the perimeter portion (300) forming hollow portion that is open in the direction in which the inner surface faces.

15. The method of claim 13 or 14, wherein forming the notch portion comprises:
forming a first notch portion (401) alongside a first side of the accommodation portion, the first notch portion (401) being concave on the inner surface; and
forming a second notch portion (402) alongside a second side of the accommodation portion, the second notch portion (402) being concave on the inner surface,
preferably wherein heat and/or pressure are applied to the perimeter portion 300 in each forming step.
